(19) Europäisches Patentamt
European Patent Office
Office européen des brevets

(11) Publication number: 0 223 852 B1

(12) # EUROPEAN PATENT SPECIFICATION

(45) Date of publication of the patent specification: **20.12.89**

(51) Int. Cl.⁴: **C 03 B 37/018**

(21) Application number: **86904472.7**

(22) Date of filing: **27.03.86**

(86) International application number: **PCT/US 86/00614**

(87) International publication number: **WO 86/07347 (18.12.86** Gazette **86/27)**

(54) **METHOD OF FABRICATING OPTICAL FIBER PREFORMS HAVING REDUCED SUSCEPTIBILITY TO RADIATION DAMAGE.**

(30) Priority: **05.06.85 US 730419**

(43) Date of publication of application: **03.06.87 Bulletin 87/23**

(45) Publication of the grant of the patent: **20.12.89 Bulletin 89/51**

(84) Designated Contracting States: **DE FR GB IT**

(56) References cited:
**GB-A- 2 134 897**
**US-A- 4 310 340**

(73) Proprietor: **Hughes Aircraft Company, 7200 Hughes Terrace P.O.Box 45066, Los Angeles California 90045-0066 (US)**

(72) Inventor: **PASTOR, Ricardo, C., 2201 Manzanita Lane, Manhattan Beach, CA 90266 (US)**
Inventor: **GORRE, Luisa, E., 1030 Jason Place, Oxnard, CA 93033 (US)**
Inventor: **TANGONAN, Gregory, L., 141 Santa Rosa, Oxnard, CA 93033 (US)**

(74) Representative: **Kuhnen, Wacker & Partner, Schneggstrasse 3-5 Postfach 1553, D-8050 Freising (DE)**

EP 0 223 852 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method for producing an optical fiber preform having a core portion of reduced $OH^-$ impurity content, comprising depositing a doped silica core layer onto the inner surface of a tube formed of fused silica in the presence of a reactive gas mixture comprising oxygen, the doped silica core layer being formed by oxydizing chlorides of dopant elements to their oxides and then collapsing the tube to form the preform. Such a method is known from GB-A-2 134 897.

Optical communications systems, that is, systems operating in the visible or near visible spectra, utilize clad glass fibers as the transmission medium. These clad glass fibers or optical fibres are produced by preparing a preform, and heating and drawing the preform into the fiber.

The optical fibers are composed of silica and have an overall cross-sectional diameter of less than approximately 500 µm and are generally constructed of two sections: a transparent glass core and a transparent glass cladding, the cladding surrounding the core having a lower refractive index relative to the core with a typical variation in refractive index from core to cladding being in the range of about 0.01 to 0.05. The core layer generally has a diameter of greater than approximately 50 µm.

A method widely used for fabricating an optical fiber is to first prepare a preform using a chemical vapor deposition (CVD) method. The CVD method comprises the steps of depositing a thin core layer composed of silica doped with various metals on the inner surface of a fused silica tube, the doped silica layer having a higher index of refraction than that of the outer surface of the tube of cladding and then collapsing the resulting tube by heating to a solid preform free from any interior space.

In the CVD process, layers of fused, doped silica are built up on the inside of a long silica glass tube by the oxidation of vaporized core precursor compounds, dispersed in an oxygen carrier resulting in the formation of metal oxide particles which deposit and are fused on the inner wall of the tube to form the doped core of the preform. When a fiber is drawn from the preform, the deposited fused metal oxides become the fiber core and the silica glass tube the cladding.

The source of the vapor deposited core is generally a chloride, hydride of other compound of silicon as well as desired dopants tailoring the index of refraction between the core and the cladding. Dopant materials include compounds of, for example, germanium, titanium, aluminum and phosphorus which increase the index of refraction of the deposited silica core layer.

In particular, liquid metal chloride materials such as $GeCl_4$, $SiCl_4$, $POCl_3$ or the like are vaporized and entrained in a carrier gas such as oxygen and are flowed as a vapor stream at a temperature of about 40°C into the interior of the fused tube which is rotated as a torch, which heats the tube to about 1000°C - 1600°C, repeatedly traverses its length. As the vapor stream passes through the tube and encounters a heat zone adjacent the torch, it reacts, pyrolyzing the metal compounds and creating oxides which deposit on the interior surface of the tube. After numerous traversals of the torch along the length of the tube to deposit the oxide core layer, the tube is heated to even higher temperatures (e.g., 1900°C - 2000°C) by the torch in several traversals to shrink the tube and in a final traversal, the tube is collapsed, resulting in a solid, rod shaped preform. Thereafter, the solid collapsed preform is drawn into an elongated filament which comprises the optical fiber.

It is known that $OH^-$ containing impurities in optical fibers produce increased transmission losses at various wavelengths of interest in optical communications systems. Transmission losses are particularly acute when the $OH^-$ contaminated optical fiber is exposed to gamma radiation, thereby further limiting the use of the fiber in radiation environments.

The $OH^-$ impurities are contained in the core section of the fiber and are derived from water vapor which is an ubiquitous impurity that is often uncontrolled in all phases of materials in preparation and processing. Such water vapor impurities are frequently present in the core precursor chlorides used in the preparation of the optical fiber preform, and the removal of these impurities from the oxide core layer deposited by the CVD process is critical to the satisfactory performance and radiation resistance of the optical fiber prepared from the preform.

In GB-A-2 134 897 a method is disclosed for producing an optical fiber preform having a core portion of reduced $OH^-$ impurity content, comprising depositing a doped silica core layer onto the inner surface of a tube formed of fused silica in the presence of a reactive gas mixture comprising oxygen, oxidizing chlorides of dopant elements to their oxides and then collapsing the tube to form the preform.

The reactive gas mixture used in the known process comprises carbon tetrahalide which is introduced into the glass preform environment being collapsed. The glas preform is formed of fused silica.

In accordance with the practice of the present invention, there is provided a method for producing an optical fiber preform having a core portion of reduced $OH^-$ impurity content, comprising depositing a doped silica core layer onto the inner surface of a tube formed of fused silica in the presence of a reactive gas mixture comprising oxygen, the doped silica core layer being formed by oxidizing chlorides of dopant elements to their oxides and then collapsing the tube to form the preform, which is characterized in that

the reactive gas mixture further comprises iodine and the doped silica core layer is formed by oxidizing further chlorides of silicon to its oxide, which method results in a radiation-damage resistant optical fiber preform.

Fig. 1 is a perspective view of an optical fiber preform prepared in accordance with the method of the present invention;

Fig. 2 illustrates in schematic form an apparatus suitable for carrying out the process of the present invention;

Fig. 3 is a photomicrograph of optical fiber preform cross sections cut across the length of the preform

wherein the metal oxide core of a first preform was deposited by the oxidation of volatilized metal chloride compounds in the presence of an $I_2/O_2$ reactive gas mixture in accordance with the present invention and is compared to a second preform having a similarly prepared core except that a $Cl_2/O_2$ reactive gas mixture was substituted for the $I_2/O_2$ gaseous mixture of the present invention; and

Fig. 4 presents infrared transmission curves for optical fibers prepared from preforms wherein the core layer is deposited by the oxidation of gaseous metal chloride compounds in the presence of an $I_2/O_2$ reactive gas mixture in accordance with the present invention, as compared to the transmission curve for a similarly prepared core except that a $Cl_2/O_2$ reactive gas mixture was substituted for the $I_2/O_2$ gaseous mixture in the preparation of the core layer.

The following detailed description relates to a method of reducing the level of $OH^-$ impurities in the metal oxide core layers of optical fiber preforms wherein the core is deposited by a CVD process using metal chloride compounds entrained in a gaseous oxygen carrier. By incorporating an $I_2/O_2$ reactive gas mixture in the gaseous metal chloride compound stream fed to the interior of the preform tube, removal of $OH^-$ impurities is effected from the deposited metal oxide core layer. The following reaction sequences involving the $SiCl_4$ component are believed to be typical of the process:

In the CVD process, $SiCl_4$ is oxidized as follows:

$$SiCl_4 + O_2 \rightarrow SiO_2 + 2Cl_2 \quad (1)$$

The $Cl_2$ produced by the oxidation of the $SiCl_4$ interacts with $I_2$ in the $I_2/O_2$ reactive gas mixture in accordance with the equation:

$$I_2 + Cl_2 \rightarrow 2ICl \quad (2)$$

The compound ICl dissociates more readily than $Cl_2$ to form atomic chlorine and iodine in accordance with the equation:

$$ICl \rightarrow I + Cl \quad (3)$$

At the temperatures employed for the CVD process, $I_2$ dissociates more readily than $Cl_2$. For instance at 1000°K, the equilibrium dissociation constant of $I_2$ is four orders of magnitude larger than $Cl_2$. $I_2$ dissociates in accordance with the equation:

$$I_2 \rightarrow 2I \quad (4)$$

The availability of atomic iodine serves as a catalyst for the dissociation of $Cl_2$ in accordance with the equation:

$$I + Cl_2 \rightarrow ICl + Cl \quad (5)$$

The overall effect of equations (3) and (5) is:

$$Cl_2 \rightarrow 2\,Cl$$

Thus, the presence of the $I_2$ in the process of the present invention serves to enhance the formation of atomic chlorine, i.e., by reaction of $Cl_2$ with $I_2$ or I. The enhancement effect on the dissociation kinetics of $Cl_2$ ranges from one to two orders of magnitude as the temperature increases from 1000°K to 2000°K.

The presence of the chlorine and iodine atoms in the gaseous core precursor compound streams passed into the preform tube remove hydrogen impurities from the deposited core oxides by displacing hydroxyl ion therefrom in accordance with the equation:

$$X + OH^- \rightarrow X^- + OH \quad (6)$$

where X is Cl or I. The tradeoff of $X^-$ for $OH^-$ as illustrated by Equation (6) does not stop there. The condensed phase that has been cleansed of its $OH^-$ content thereafter loses the $X^-$ by another displacement reaction, as follows:

$$1/2\,O_2 + 2X^- \rightarrow O^= + X_2 \uparrow, \quad (7)$$

which illustrates the active role of the carrier gas, $O_2$.

The free hydroxyl species so formed volatilizes as an unreacted species or as the reacted species XOH and is thereby removed from the deposited core layer in the stream of core precursor gas which passes through the tube interior.

Since the CVD process is effected by the passage of metal chloride compounds in the form of a vapor cojointly with oxygen gas, it is preferable that the metal chloride compounds have a vapor pressure so that they are vaporizable and flowable in the form of a gas, at relatively low temperatures, e.g., 50°C - 100°C.

It is critical to the practice of the present invention that metal chlorides be used as the core precursor compounds, as iodide compounds are impractical for CVD practice; the iodides are less volatile and more thermally unstable than the chlorides. Thus, whereas $SiCl_4$ has a boiling point of 58°C, $SiI_4$ does not achieve ebullition until 288°C. The dopant chloride compound $GeCl_4$ has a boiling point of 85°C whereas $GeI_4$ vaporizes with decomposition at 440°C.

Dopant forming compounds which may be used in the practice of the present invention are, for example, metal chloride compounds which can be volatilized at relatively low temperatures, e.g., 50°C - 100°C, and which increase the refractive index of the deposited silica core layer. Examples of such metal chloride compounds include $GeCl_4$, $TiCl_4$, $AlCl_3$, $POCl_3$ which oxidize to form the dopants $GeO_2$, $TiO_2$, $Al_2O_3$ and $P_2O_5$, respectively.

In preparing the core precursor materials for passage to the interior of the tube from which the optical fiber preform is fabricated, the metal chloride compounds, which are generally liquids at room temperature, are heated to above their vaporization temperature and the so-produced metal chloride vapors are mixed with oxygen gas which acts as a carrier for the vaporized metal chlorides, whereby the metal chlorides are entrained in the gaseous carrier. Generally,

the gaseous mixture passed into the tube is comprised of $SiCl_4$, a dopant metal chloride, and oxygen in sufficient proportions so as to result in a core of 80% $SiO_2$ and 20% metal oxide.

When the vaporized metal chloride compounds entrained in the oxygen gas carrier are flowed through the interior of a fused silica tube which is heated at a temperature of about 1,700°C to about 2,000°C and preferably about 1,800°C to about 2,000°C, the metal chlorides are oxidized to their respective oxides and uniformly deposited onto the interior surface walls of the tube followed by diffusion, dissolution or chemical reaction with the fused silica, whereby the surface layer of the tube is modified with a doped silica layer of a higher refractive index than the tube walls. The cojoint passage through the interior of the tube of the reactive $I_2/Cl_2/O_2$ gaseous mixture removes any $OH^-$ existing on the surface of the deposited metal oxide core layer so that the collapsing of the tube following the desired deposition of the doped core layer produces a preform core which is substantially free of $OH^-$ impurity. To effect the removal of $OH^-$, the gaseous $I_2/O_2$ mixture generally comprises approximately 13 volume percent $I_2$.

The time required for the deposition of the doped core layer and the scrubbing of the deposited layer with the $I_2/Cl_2/O_2$ reactive gas mixture to remove $OH^-$ impurities depends upon the flow rate of the gaseous mixtures and the concentration of the various core forming compounds and reactive gas components, with the tendency that the greater the flow rate and the higher the concentrations of the various core forming compounds and reactive gas components, the shorter the processing time to obtain a deposited doped core layer substantially free of $OH^-$ impurity. Particularly advantageous results are obtained when the gaseous mixture of core precursor compounds preferably comprises about 73 volume percent $SiCl_4$, 27 volume percent of the dopant compounds and the $I_2/O_2$ reactive gas mixture preferably comprises about 13 volume percent $I_2$ in the oxygen carrier gas. Using such concentrations of compounds in combination with a travelling heat source, a core layer of about 3 mm in diameter which is substantially free of $OH^-$, can be deposited in less than about 3 to 6 hours. The heat source must be repeatedly or reciprocally moved a required number of times (e.g., 50) at a speed of 20 per hour to maintain the walls, on which the core layer is deposited, at a temperature of 1000°C - 1600°C.

Fig. 1 depicts a portion of an optical fiber preform 10 constructed of a glass tube having an outer wall 11 and a core 12 formed from a plurality of doped silica layers.

Fig. 2 is a schematic drawing of a glass working lathe 13 which can be used to fabricate the optical preform 10. The starting glass tube 11 is mounted between synchronous rotatable chucks 14 - 14'. As the tube 11 is rotated, as for example, in the direction shown by the arrow 15, it is heated by a gas oxygen burner 16 which repeatedly traverses its length slowly from left to right and makes a fast return to the left after each traversal. Metal chloride compounds which are to be oxidized to metal oxides and deposited on the inner wall of the glass tube 11 to form the core 12 of the preform 10, such as $SiCl_4$ and dopants $GeCl_4$ and $POCl_3$, are heated to their vaporization temperatures and introduced into manifold 17 via inlet tubes 17a - d, which are in turn connected to heated source material reservoirs, not shown. The carrier gas, oxygen, is admitted to the manifold 17 via inlet 17d from the reservoir not shown. The vaporized metal chlorides and oxygen are mixed in the manifold 17 so that there is emitted from the manifold a constant stream of the mixture of vaporized silicon tetrachloride and dopant metal chlorides dispersed in the gaseous oxygen carrier which flow into the central opening 18 of the tube 11 through inlet pipe 17'.

Also connected to manifold 17 is inlet 17e through which a gaseous reactive mixture of dry oxygen and iodine comprised approximately of about 13% iodine in the dry oxygen is passed into the manifold 17 from the iodine reservoir 19. In preparing the gaseous mixture of oxygen and iodine, high purity (99.99%) oxygen from a source, not shown, is passed at a flow rate of 25 $cm^3$/min into a cold trap, also not shown, where residual water is removed from the oxygen by freezing in a dry ice/acetone mixture contained in the trap. The dried oxygen is then passed into the iodine reservoir 19 containing iodine vapor. The iodine vapor is produced by activating heat elements 20 to raise the temperature in the reservoir 19 to approximately 110°C. The dry oxygen passed into the reservoir 19 from inlet 17f mixes with the iodine vapor, and gaseous reactive $I_2/O_2$ mixture is caused to flow out of the reservoir 19 via outlet 17e into the pipe 17'. Not shown is the arrangement of mixing valves and shutoff valves which may be utilized to meter flows and make other necessary adjustments to the various gaseous compositions passed into the pipe 17' and thereafter in the central opening 18 of the tube 11.

The $I_2/O_2$ reactive gaseous mixture is caused to be admixed with the core forming gaseous metal chloride compounds in the pipe 17' and this mixture of gaseous materials is passed from the pipe 17' through input gas line 21 into the interior 18 of the tube 11.

As the mixture of core forming, oxygen dispersed metal chloride compounds and $I_2/O_2$ reactive gas mixture encounters the heat zone (approximately 1400°C - 1600°C) caused by the burner 16, the metal chloride compounds are decomposed and reacted with oxygen to produce deposits which are composed of oxides of the metal chlorides. Thus, as the oxidized metal chlorides are converted to their respective oxides, the oxides are deposited on the interior surface of the tube 11 ahead of the heat zone on the cooler surfaces of the tube 11. Gaseous and solid particles not deposited on the interior surface of the tube 11 as a doped core layer pass out of the tube 11 via exhaust tube 23. A plurality of traversals of the burner 16 (e.g., about 50) are accomplished until a predetermined thickness of the doped core layer 12 is attained. Concommitant with the deposit of the doped core layer, the cojoint presence of the $I_2/Cl_2/O_2$ reactive mixture effects a reaction with $OH^-$ impurities existing at the surface of the deposited core layer which are then removed as volatile unreacted hydroxyl species.

After the requisite deposit of doped core layer 12 has been attained, the tube 11 is heated to a higher temperature (e.g., 1900°C - 2000°C) to cause the tube 11 to soften, shrink and finally collapse to form the solid optical fiber preform 10 shown in Fig. 1. This is accomplished by elevating the temperature of the burner 16 to provide a localized heat zone which is slowly traversed (e.g., less than 0.5 mm/sec.) along the tube 11 to effect localized softening of the tube wall. A number of traversals (e.g., 6) of the elevated heat zone along the length of the tube 11 progressively shrinks the diameter of the tube until, on a final collapse traversal which moves the heat zone from right to left, the tube with the doped core layer 12 deposited therein, is completely collapsed to form the preform 10.

The present invention provides, as described above, a method of fabricating an optical fiber preform which may be used to form optical fibers which exhibit reduced susceptibility to transmission loss, and particularly to gamma radiation exposure, by reducing the $OH^-$ impurity in the core layer.

The present invention will be understood more readily with reference to the following example. The example, however, is intended to illustrate the present invention and is not to be construed to limit the scope of the present invention.

*Example*

A tube of commercial grade fused silica of 0.5 meter length 13 mm ID x 20 mm OD was first cleaned by immersion in hydrofluoric acid-nitric acid solution for 3 minutes and was rinsed with deionized water. The tube was mounted in an apparatus of the type shown in Fig. 2. Doped core material was deposited on the interior wall surfaces as the tube was rotated at 100 rpm. Before the doped core precursor compounds were introduced into the interior of the tube, the tube was flushed with a continuous stream of an $I_2/O_2$ mixture comprising 13% $I_2$ in oxygen flowed into the tube at a flow rate of 25 $cm^3$/min while traversing with an oxyhydrogen burner sufficient to bring the wall temperature of the tube to 700°C to 800°C in order to remove or scrub any $OH^-$ impurities present on the interior wall surface. Following a period of about 10 minutes, a mixture of gaseous $SiCl_4$, $GeCl_4$ and $POCl_3$ was introduced entrained in an oxygen carrier, the flow rate being 80 $cm^3$/min for $SiCl_4$, 186 $cm^3$/min for $GeCl_4$, 37 $cm^3$/min for $POCl_3$, 150 $cm^3$/min for $O_2$, and 750 $cm^3$/min for He. Parallel with the introduction of the chloride compounds, a mixture of about 13% iodine in oxygen was flowed into the interior of the tube at a flow rate of approximately 25 $cm^3$/min. Forty additional passes of the burner were made over a 2 hour period with the parallel flow of $SiCl_4/GeCl_4/POCl_3/O_2$ core precursor compounds and $I_2/O_2$ reactive gas mixture through the tube. After this period of time, the flow of doped core precursor compounds was discontinued and the flow of the $I_2/O_2$ reactive gas mixture was continued for several additional passes of the burner.

Collapse of the tube was initiated with the $I_2/O_2$ gas mixture still flowing by reducing the rate of traverse of the burner so that the temperature of the tube walls was raised to 2,200°C. After almost complete collapse of the tube, the $I_2/O_2$ flow was stopped with a final collapse producing a finished preform having a diameter of 10 mm composed of a silica cladding, and a doped silica core of 3 mm thickness.

To determine the effect of gamma (γ) radiation on the transmission properties of the finished optical fiber preform, a section A was cut across the length of the preform and exposed to $10^6$ rads γ-radiation from a cobalt-60 source.

In Fig. 3, there is shown a photomicrograph of the irradiated finished preform Section A.

For purposes of comparison, the procedure of the Example was repeated to prepare an optical fiber preform, with the exception that a $Cl_2/O_2$ reactive gas mixture with $Cl_2$, resulting from the dissociation of the metal chlorides, was substituted for the $I_2/Cl_2/O_2$ reactive gas mixture used in the Example. A section B was cut out of this comparative preform which was also exposed to $10^6$ rads of γ-radiation. Fig. 3 also contains a photomicrograph of this irradiated comparative preform.

An examination and comparison of photomicrographs of preform sections A and B immediately indicate that the core 12 of preform A had undergone substantially less γ-radiation damage than the core 12a of comparative preform B. The cross-sections of the preforms were obtained by cutting the preform and polishing the ends. Exposure to γ-radiation darkens the fiber preforms after 1 mega-rad dose. The remarkable feature here is the difference in transparency between the $I_2/Cl_2/O_2$ reactive atmosphere (RAP) preform (12), and the $Cl_2/O_2$ RAP preform.

A portion of the preform prepared in the Example was drawn to result in a fiber having an overall diameter of approximately 175 µm, with a doped core area defined as a region within the fused silica outer layer having a diameter of approximately 100 µm. The length of fiber drawn was approximately 500 m.

Portions of the drawn fiber were then exposed to varying doses of γ-radiation from a cobalt-60 source.

The induced transmission loss at 0.82 µm wavelength at the different radiation doses was measured by monitoring the transmission during irradiation. $Co^{60}$ radiation was used in these tests.

Curve A in Fig. 4 presents the induced transmission loss data for the first optical fiber prepared in accordance with the Example which had been subjected to varying doses of γ-radiation. Curve B presents the induced transmission loss data for the second optical fiber obtained from the same preform as in A, this second optical fiber having also been irradiated with varying doses of γ-radiation.

For purposes of comparison, the procedure of the Example was repeated to prepare an optical fiber, with the exception that a reactive mixture of $Cl_2$ in oxygen was substituted for the $I_2/Cl_2/O_2$ reactive gas mixture, the $Cl_2$ obtained from the dissociation of the metal chlorides.

A portion of the comparative optical fiber was exposed to varying doses of γ-radiation. Curve C in Fig. 4 presents the induced transmission loss data for the comparative optical fiber.

A comparison of the data recorded in Curves A and B of the graph in Fig. 4 with that of Curve C immediately indicates that the comparative optical fibers prepared from a glass-preform in which the core was deposited under an $Cl_2/O_2$ atmoshere undergoes a substantially greater transmission loss than optical fibers prepared from a glass-preform in which the core was deposited under an $I_2/Cl_2/O_2$ atmosphere in accordance with the present invention. Thus, Curve A indicates that the optical fiber prepared from a first preform processed in accordance with the practice of the present invention at dosages up to 2 x $10^4$ rads undergoes an initial induction, or radiation-dose threshold behavior during which there is little transmission loss. Curve B indicates that second optical fiber prepared from the first preform processed in accordance with the present invention does not undergo a transmission loss until the fiber is subjected to a radiation dose of 15 x $10^4$ rads. Curve C, on the other hand, indicates that the comparative optical fiber immediately encounters a significant transmission loss when exposed to γ-radiation. At a dose of about 2 x $10^4$ rad, the transmission loss in the comparative fiber rises to about 95 db/km above the baseline value, while the fibers prepared from preforms processed in accordance with the present invention exhibits an incremental transmission loss of only 10 db/km.

**Claims**

1. A method for producing an optical fiber preform having a core portion of reduced $OH^-$ impurity content, comprising depositing a doped silica core layer onto the inner surface of a tube formed of fused silica in the presence of a reactive gas mixture comprising oxygen, the doped silica core layer being formed by oxidizing chlorides of dopant elements to their oxides and then collapsing the tube to form the preform, characterized in that the reactive gas mixture further comprises iodine and the doped silica core layer is formed by oxidizing further chlorides of silicon to its oxide, which method results in a radiation-damage resistant optical fiber preform.

2. The method of claim 1 wherein the dopant elements are selected from the group consisting of Ge, Ti, Al and P.

3. The method of claim 2 wherein the dopant elements are Ge and P.

4. The method claim 1 wherein the doped silica core layer is deposited at a temperature of about 1000°C to about 1600°C.

5. The method of claim 1 wherein the reactive gas mixture is comprised of about 13 volume percent gaseous iodine and about 87 volume percent oxygen.

**Patentansprüche**

1. Ein Verfahren zum Herstellen einer optischen Faservorform mit einem Kernteil mit vermindertem $OH^-$Verunreinigungsgehalt, welches umfaßt:

Abscheiden einer dotierten Siliziumdioxidkernschicht auf der inneren Oberfläche eines Rohres, gebildet aus Quarzglas in der Gegenwart einer reaktiven Gasmischung mit Sauerstoff, wobei die dotierte Siliziumdioxidkernschicht durch Oxidieren von Chloriden der Dotierungselemente zu ihren Oxiden gebildet wird und dann das Rohr zum Kollabieren gebracht wird, um die Vorform zu bilden, dadurch gekennzeichnet, daß die reaktive Gasmischung ferner Jod enthält und die dotierte Siliziumdioxidkernschicht durch Oxidieren weiterer Chloride des Siliziums zu seinem Oxid gebildet wird, wobei das Verfahren zu einer strahlenschadenwiderstandsfähigen optischen Faservorform führt.

2. Das Verfahren nach Anspruch 1, worin die Dotierungselemente ausgewählt werden aus der Gruppe bestehend aus Ge, Ti, Al und P.

3. Das Verfahren nach Anspruch 2, worin die Dotierungselemente Ge und P sind.

4. Das Verfahren nach Anspruch 1, worin die dotierte Siliziumdioxidkernschicht bei einer Temperatur von ungefähr 1000°C bis 1600°C abgeschieden wird.

5. Das Verfahren nach Anspruch 1, worin die reaktive Gasmischung aus ungefähr 13 Volumenprozent gasförmigem Jod und ungefähr 87 Volumenprozent Sauerstoff zusammengesetzt ist.

**Revendications**

1. Procédé de préparation d'une préforme de fibre optique ayant une partie noyau de teneur réduite en impuretés $OH^-$, dans lequel on dépose une couche noyau de silice dopée à la surface interne d'un tube formé de silice fondue en présence d'un mélange gazeux réactif contenant de l'oxygène, la couche noyau de silice dopée étant formée en oxydant des chlorures d'éléments dopants en leurs oxydes puis en écrasant le tube pour former la préforme caractérisé en ce que le mélange gazeux réactif comprend en outre de l'iode et en ce que la couche noyau de silice dopée est formée en oxydant plus avant des chlorures de silicium pour les transformer en oxydes, ce procédé conduisant à une préforme de fibre optique résistant à la dégradation par les rayonnements.

2. Procédé selon la revendication 1, dans lequel les éléments dopants sont choisis dans le groupe constitué par Ge, Ti, Al et P.

3. Procédé selon la revendication 2, dans lequel les éléments dopants sont Ge et P.

4. Procédé selon la revendication 1, dans lequel la couche noyau de silice dopée est déposée à une température d'environ 1000°C à environ 1600°C.

5. Procédé selon la revendication 1, dans lequel le mélange gazeux réactif est constitué d'environ 13% en volume d'iode gazeux et d'environ 87% en volume d'oxygène.

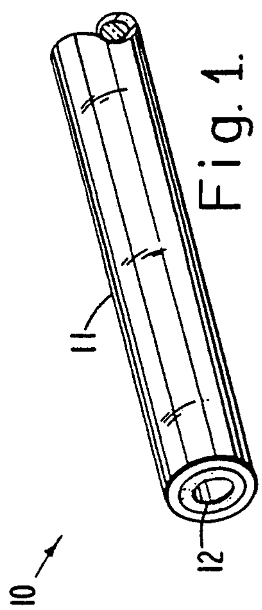
10
11
12

Fig. 1.

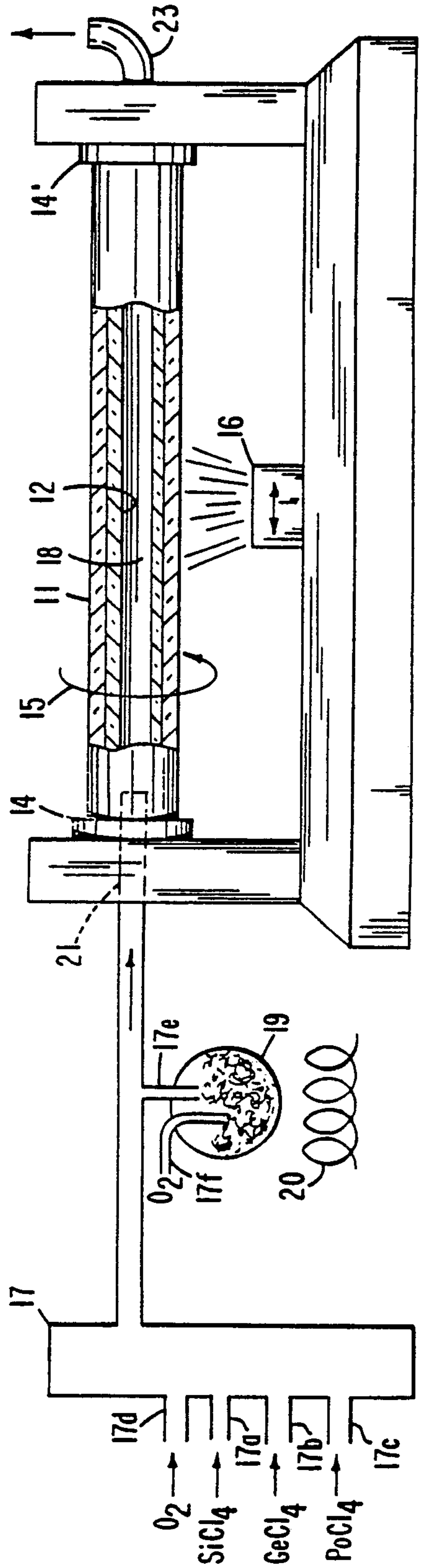
23
14'
16
12
18
11
15
14
21
17e
19
$O_2$
17f
20
17
17d
17a
17b
17c
$O_2$
$SiCl_4$
$GeCl_4$
$PoCl_4$

Fig. 2.

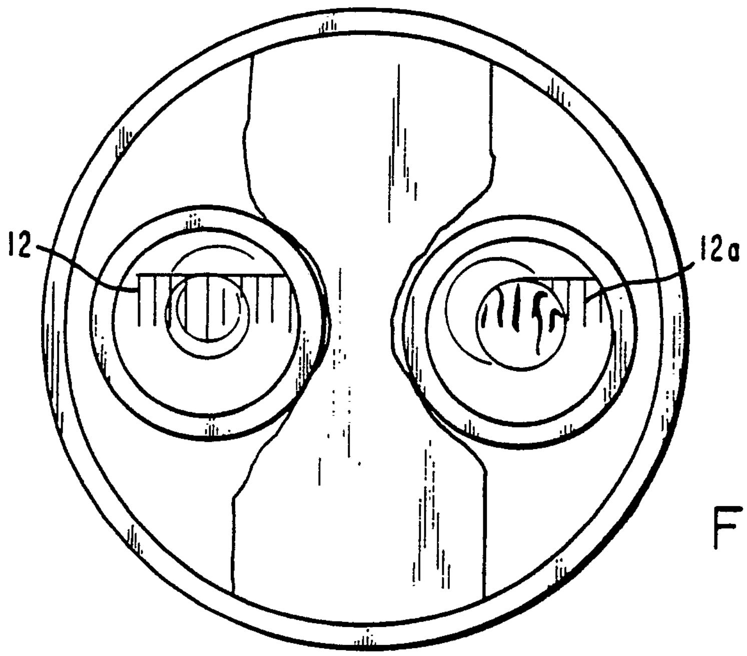
12
12a

Fig. 3.

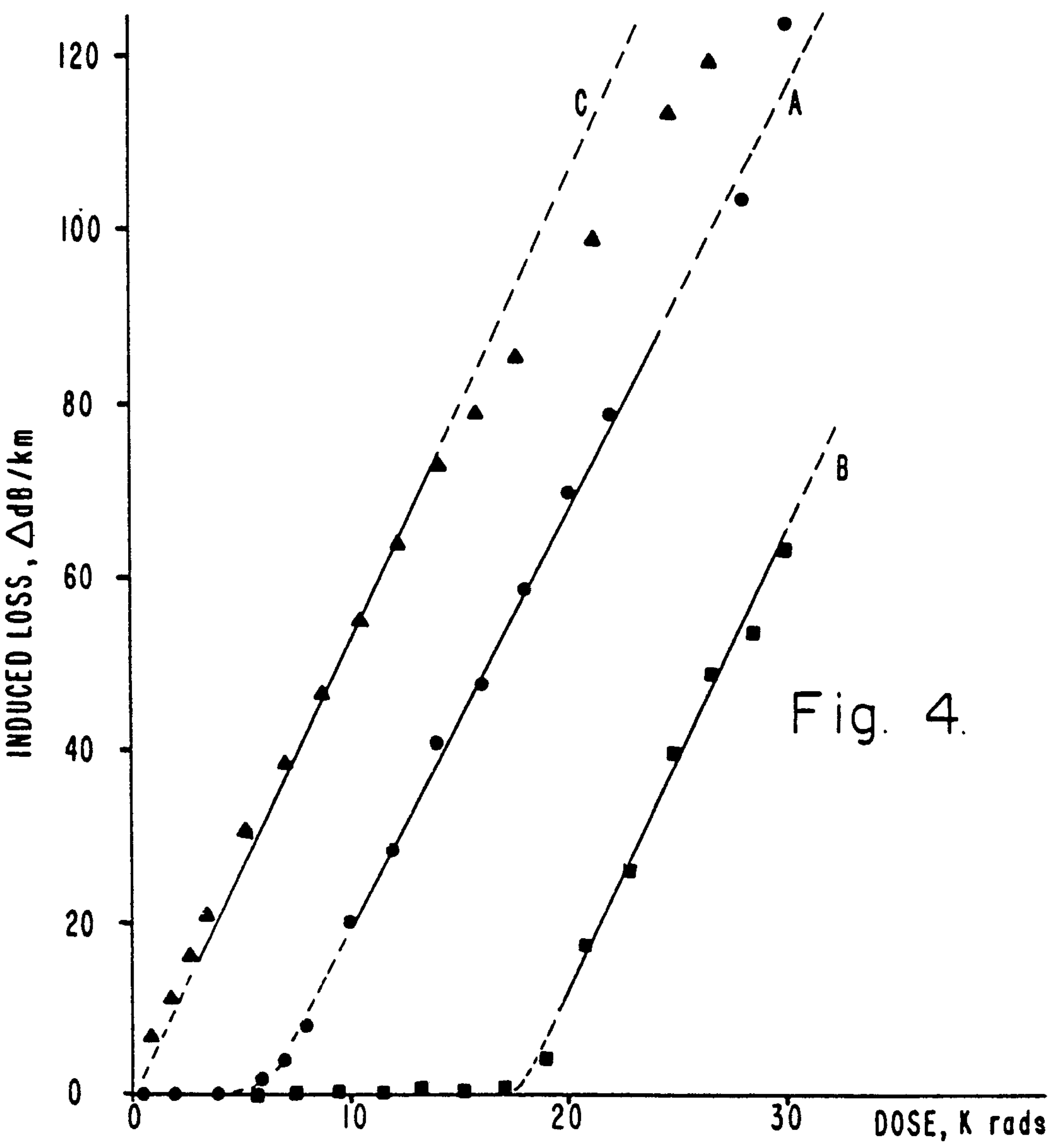
INDUCED LOSS, ΔdB/km
0
20
40
60
80
100
120
0
10
20
30
DOSE, K rads
C
A
B

Fig. 4.